# EUROPEAN PATENT APPLICATION

(11) **EP 4 756 978 A1**
(43) Date of publication of application: **10.06.2026**
(21) Application number: 25220375.7
(22) Date of filing: 03.12.2025
(51) Int. Cl.: H01M 10/0587, H01M 50/107, H01M 50/533, H01M 50/536, H01M 50/538

(54) **SECONDARY BATTERY AND BATTERY PACK**

(30) Priority: 06.12.2024 CN 202423015604 U
(71) Applicant: AESC Japan Ltd., Yokohama-shi, Kanagawa 220-0012 (JP)
(72) Inventor: JI, Peng, Jiangyin City, Wuxi City, 214443 (CN); YU, Jinsheng, Jiangyin City, Wuxi City, 214443 (CN); LI, Qiankun, Jiangyin City, Wuxi City, 214443 (CN); XU, Chengjun, Pudong New Area Shanghai, 201315 (CN)
(74) Representative: Becker, Eberhard

(57) **Abstract**

A secondary battery (100), a battery pack (10), and an electronic device (1) are provided. The secondary battery (100) includes an electrode assembly (120), a shell (110), and a current collecting component (130). The shell (110) accommodates the electrode assembly (120), and a side of the shell (110) close to an opening (113) includes a rolling groove (114). The current collecting component (130) is disposed between the rolling groove (114) and the electrode assembly (120) and includes a current collecting body (131) connected to the electrode assembly (120) and a connecting sheet (132) bending toward the current collecting body (131) and welded to the rolling groove (114), thereby forming a first welding mark (1325). The connecting sheet (132) includes a bending portion (1322) provided with a first weak portion (1323) which is located between the first welding mark (1325) and the current collecting body (131).

## Description

### BACKGROUND

### Technical Field

The disclosure relates to the technical field of batteries, and specifically relates to a secondary battery, a battery pack, and an electronic device.

### Description of Related Art

Mechanical sealing is the mainstream packaging method for existing cylindrical batteries and is widely applied due to its advantages of mature process and equipment and fast production cycle. Existing cylindrical batteries usually dispose a current collecting component at a position of the shell close to the opening, so that an end of the current collecting component is welded and connected to the side wall of the shell, and the other end is electrically connected to the tab of the electrode assembly, thereby achieving electrical connection between the shell and the electrode assembly and then performing mechanical sealing.

Mechanical sealing includes rolling a rolling groove that is recessed toward the interior of the shell on the side wall of the shell, and then making the cover plate pressed tightly through a pier sealing method. During the rolling groove process, the current collecting component bends following the deformation of the rolling groove. Due to the existence of bending stress, welding failure between the current collecting component and the shell is easily caused.

### SUMMARY

The disclosure provides a secondary battery, a battery pack, and an electronic device to improve a technical issue of welding failure between a current collecting component and a shell being easily caused during a mechanical sealing process of the secondary battery.

To achieve the above objectives and other related objectives, the disclosure provides a secondary battery, a battery pack, and an electronic device. The secondary battery includes an electrode assembly, a shell, and a current collecting component. The shell accommodates the electrode assembly. An end of the shell includes an opening. A side of the shell close to the opening includes a rolling groove recessed toward an interior of the shell, and the rolling groove restricts the electrode assembly from moving in a direction toward the opening. The current collecting component is at least partially disposed between the rolling groove and the electrode assembly. The current collecting component includes a current collecting body and a connecting sheet connected to an outer periphery of the current collecting body. The current collecting body is connected to the electrode assembly. The connecting sheet bends toward a center of the current collecting body, and the connecting sheet is welded to a surface of the rolling groove facing the electrode assembly, forming a first welding mark. The connecting sheet includes a bending portion located between the first welding mark and the current collecting body, and a portion of the bending portion close to the first welding mark is provided with a first weak portion for reducing a stress transmission to the first welding mark when the bending portion bends.

In an example of the secondary battery of the disclosure, a portion of the first weak portion away from the first welding mark extends to the current collecting body.

In an example of the secondary battery of the disclosure, a thickness of the first weak portion is c, a thickness of the current collecting body is d, and c<d.

In an example of the secondary battery of the disclosure, 0.05mm≤c≤0.15mm.

In an example of the secondary battery of the disclosure, along an extending direction of the first weak portion, a length of the first weak portion is a, and 1.5mm≤a≤3mm.

In an example of the secondary battery of the disclosure, along the extending direction of the first weak portion, a length of the bending portion is b, a thickness of the connecting sheet at the first welding mark is f, and a<b and c<f.

In an example of the secondary battery of the disclosure, an overall thickness of the connecting sheet is c.

In an example of the secondary battery of the disclosure, the bending portion bends to form a first corner with an overall arc transition.

In an example of the secondary battery of the disclosure, there are multiple first weak portions, and the multiple first weak portions are arranged along a direction from the first welding mark toward the current collecting body.

In an example of the secondary battery of the disclosure, a second weak portion is disposed between the current collecting body and the bending portion, the second weak portion is disposed at a portion of the bending portion away from the first welding mark, and the second weak portion is configured to reduce a stress transmission from the bending portion to the current collecting body when the bending portion bends.

In an example of the secondary battery of the disclosure, the current collecting body includes multiple folded portions. The folded portions are configured to be able to fold from a middle portion of the current collecting body toward a direction away from the electrode assembly when an internal pressure of the secondary battery exceeds a threshold. A second corner is formed at the second weak portion, and a third corner is formed at the first weak portion.

In an example of the secondary battery of the disclosure, the folded portion is welded to the electrode assembly to form a second welding mark, and along a radial direction of the shell, each folded portion is at least partially collinear with the connecting sheet.

In an example of the secondary battery of the disclosure, a distance from an end of the first weak portion close to the first welding mark to the first welding mark is e, and e≥0.2mm.

In an example of the secondary battery of the disclosure, the second weak portion includes one of or a combination among thinning, scoring, and hollowing.

In an example of the secondary battery of the disclosure, the first weak portion includes one of or a combination among thinning, scoring, and hollowing.

In an example of the secondary battery of the disclosure, along the radial direction of the shell, a distance from a side of the first welding mark close to a center of the current collecting body to a free end of the connecting sheet is g, a size of the unfolded connecting sheet is h, and g≤h/3.

In an example of the secondary battery of the disclosure, 0.2mm≤g≤1mm.

In an example of the secondary battery of the disclosure, along a radial direction of the secondary battery, a distance from a point on the rolling groove closest to an axis of the shell to an outer peripheral surface of the shell is i, a distance from the first welding mark to the outer peripheral surface of the shell is j, and j≤0.5i.

The disclosure also provides a battery pack. The battery pack includes the secondary battery of any one of the above.

The disclosure also provides an electronic device. The electronic device includes the above battery pack.

### BRIEF DESCRIPTION OF THE DRAWINGS

To more clearly illustrate the technical solutions in the embodiments of the disclosure or in the prior art, the drawings required for use in the description of the embodiments or prior art will be briefly introduced below. Obviously, the drawings in the following description are merely some embodiments of the disclosure, and for those of ordinary skill in the art, other embodiments may also be obtained based on these drawings without creative effort.
FIG. 1 is a structural schematic diagram of an embodiment of the secondary battery of the disclosure.
FIG. 2 is a structural schematic diagram of the electrode assembly in an embodiment of the secondary battery of the disclosure.
FIG. 3 is a partial enlarged view of the connection portion between the connecting sheet and the shell in an embodiment of the secondary battery of the disclosure.
FIG. 4 is a partial enlarged view of portion C in FIG. 1.
FIG. 5 is a partial enlarged view of portion D in FIG. 4.
FIG. 6 is a structural schematic diagram of an embodiment of the secondary battery of the disclosure.
FIG. 7 is a partial enlarged view of the connection portion between the connecting sheet and the shell in an embodiment of the secondary battery of the disclosure.
FIG. 8 is a partial enlarged view of portion E in FIG. 6.
FIG. 9 is a partial enlarged view of portion F in FIG. 8.
FIG. 10 is a structural schematic diagram of an embodiment of the secondary battery of the disclosure.
FIG. 11 is a partial enlarged view of the connection portion between the connecting sheet and the shell in an embodiment of the secondary battery of the disclosure.
FIG. 12 is a partial enlarged view of a portion A in FIG. 10.
FIG. 13 is a partial enlarged view of a portion B in FIG. 12.
FIG. 14 is a partial enlarged view of the connection portion between the connecting sheet and the shell in an embodiment of the secondary battery of the disclosure.
FIG. 15 is a structural schematic diagram of the current collecting component in an embodiment of the secondary battery of the disclosure.
FIG. 16 is a structural schematic diagram of the current collecting component in an embodiment of the secondary battery of the disclosure.
FIG. 17 is a top view of the current collecting component and the electrode assembly in an embodiment of the secondary battery of the disclosure.
FIG. 18 is a schematic diagram of an embodiment of the battery pack of the disclosure.
FIG. 19 is a schematic diagram of an embodiment of the electronic device of the disclosure.

### DESCRIPTION OF THE EMBODIMENTS

The following describes the implementation methods of the disclosure through specific examples. Those skilled in the art may easily understand other advantages and effects of the disclosure from the content disclosed in this specification. The disclosure may also be implemented or applied through other different specific embodiments, and various details in this specification may also undergo various modifications or changes based on different viewpoints and applications without departing from the spirit of the disclosure. It should be noted that, in the absence of conflict, the following embodiments and features in the embodiments may be combined with each other. It should also be understood that the terms used in the embodiments of the disclosure are for describing specific implementations and are not intended to limit the protection scope of the disclosure. Test methods without specific conditions noted in the following embodiments are generally conducted according to conventional conditions or according to conditions recommended by respective manufacturers.

When embodiments provide numerical ranges, it should be understood that, unless otherwise specified in the disclosure, both endpoints of each numerical range and any numerical value between the two endpoints may be selected. Unless otherwise defined, all technical and scientific terms used in the disclosure are consistent with the understanding of existing technology by those skilled in the art and the description of the disclosure. Any methods, equipment, and materials of existing technology that are similar or equivalent to the methods, equipment, and materials in the embodiments of the disclosure may also be used to implement the disclosure.

It should be noted that terms such as "upper", "lower", "left", "right", "middle", and "one" referenced in this specification are merely for clarity of description and are not intended to limit the implementable scope of the disclosure. Changes or adjustments to their relative relationships, without substantial changes to the technical content, should also be considered within the implementable scope of the disclosure.

A secondary battery includes an electrode assembly. The electrode assembly is a component in the secondary battery where electrochemical reactions occur, and one or more electrode assemblies may be included.

The secondary battery further includes a shell, a cover plate, and a pole piece. The shell includes an end wall and side walls surrounding the end wall. An end of the side walls has an opening. The electrode assembly may be assembled into the shell through the opening of the shell. The cover plate is configured to cover the opening of the shell to achieve sealing. The pole piece passes through the end wall and is electrically connected to the electrode assembly to conduct the electrical energy generated by the electrode assembly.

A mainstream packaging method for existing secondary batteries is mechanical sealing. Mechanical sealing is widely applied due to the advantages of mature processes and equipment and fast production cycles. The current collecting component is simultaneously electrically connected to both the electrode assembly and the shell to achieve electrical connection between the electrode assembly and the shell. Specifically, a rolling groove that is recessed toward the interior of the shell is first rolled on the side wall of the shell. The side of the rolling groove close to the electrode assembly presses against the edge of the current collecting component. This rolling groove may limit the axial displacement of the electrode assembly. The cover plate is installed on a step formed on the side of the rolling groove away from the electrode assembly. A sealing member is disposed between the cover plate and the shell. Then, the edge of the opening is pier sealed to make the cover plate press against the sealing member, forming a reliable connection and achieving sealing of the shell.

There are multiple methods for connecting the current collecting component to the shell. A commonly used method includes the following steps. Connecting sheets are disposed at the edge of the current collecting component. The connecting sheets are first welded and fixed to the side wall of the shell, and then a rolling groove is rolled on the side wall to make the connecting sheets continue to bend toward the axis of the shell. However, it is found that during the bending process, the connecting sheets exerts a large pulling force at the welding position between the connecting sheets and the side wall, leading to a risk of fracture of the connecting sheets at the welding position. In the subsequent pier sealing process, the current collecting component is subjected to downward pressure. The edge of the fractured current collecting component approaches a vertical state, and after being pressed, there is a possibility of insertion into the electrode assembly, which may lead to damage to the electrode assembly and reduce product yield.

In view of this, the disclosure provides a technical solution in which a first weak portion is disposed on the bending portion, which may reduce the stress when the bending portion bends, making the bending portion more bendable and less prone to fracture. Furthermore, it may also reduce the risk of the edge of the current collecting component being pressed into the electrode assembly during the pier sealing process, thereby improving product yield.

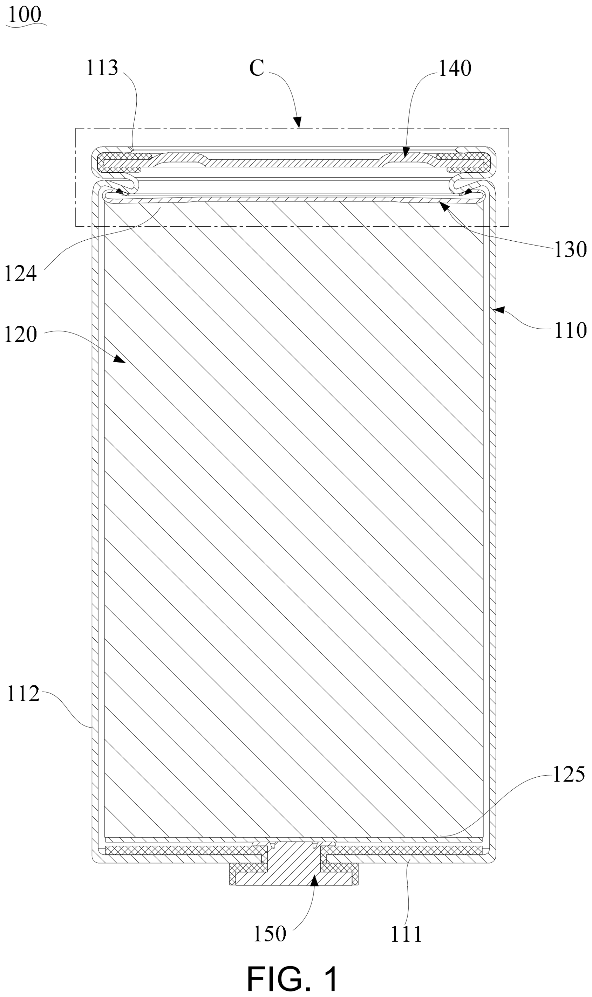

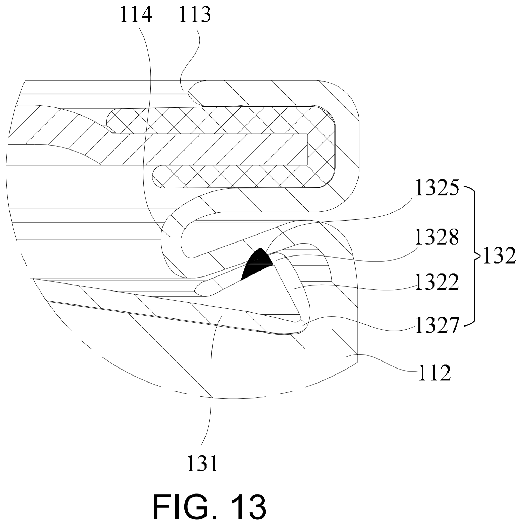

Referring to FIG. 1 to FIG. 19, the disclosure provides a secondary battery 100. The secondary battery 100 includes a shell 110, an electrode assembly 120, a current collecting component 130, a cover plate 140, and a pole piece 150.

Referring to FIG. 1, the shell 110 includes an end wall 111 and a side wall 112 surrounding the end wall 111. As long as a stable sealing and electrical connection relationship can be formed, the connection between the end wall 111 and the side wall 112 may be achieved through various methods, for example, integral stamping, integral casting, or separate welding. The surrounding of the side wall 112 is not limited and may be in a cylindrical or prismatic surrounding form, or may surround along any other closed-loop contour that can match the end wall 111. In this example, the outer edge of the end wall 111 is circular, the side wall 112 surrounds the outer edge of the end wall 111 in a cylindrical shape, and a circular opening 113 is formed at the end of the side wall 112 away from the end wall 111. An accommodating chamber is formed inside the shell 110 enclosed by the end wall 111 and the side wall 112 for accommodating the electrode assembly 120, electrolyte, and other necessary battery components. Specifically, the diameter of the shell 110 may be determined according to the specific sizes of the electrode assembly 120, such as 18mm, 21mm, 46mm, etc. The material of the shell 110 may be various, for example, copper, iron, aluminum, steel, aluminum alloy, etc. To prevent the shell 110 from rusting during long-term use, a layer of anti-rust material such as metallic nickel may also be plated on the surface of the shell 110.

Referring to FIG. 1 to FIG. 2, the electrode assembly 120 is accommodated in the shell 110. The electrode assembly 120 is a component in which electrochemical reactions occur in the secondary battery 100. The shell 110 may contain one or more electrode assemblies 120. The electrode assembly 120 includes a winding structure formed by laminating and winding a first electrode sheet 121, a second electrode sheet 123, and a separator 122. The first electrode sheet 121 and the second electrode sheet 123 have opposite polarities. In some examples, the first electrode sheet 121 is a positive electrode sheet and the second electrode sheet 123 is a negative electrode sheet. In other examples, the first electrode sheet 121 is a negative electrode sheet and the second electrode sheet 123 is a positive electrode sheet.

Referring to FIG. 1 to FIG. 2, in this example, the first electrode sheet 121 is a negative electrode sheet. The first electrode sheet 121 includes a negative current collector 1211 and a negative active material, and the negative active material is coated on the surface of the negative current collector 1211. The negative current collector 1211 includes a first coated region 1212 coated with active material and a first uncoated region 1213 not coated with active material. The first uncoated region 1213 is located at an end of the first electrode sheet 121. The first uncoated region 1213 extends from the separator 122 along the winding axis direction of the electrode assembly 120 and bends toward the winding axis to form a first tab 124. The first tab 124 is a corresponding negative tab.

Referring to FIG. 1 to FIG. 2, the second electrode sheet 123 is a positive electrode sheet. Specifically, the second electrode sheet 123 includes a positive current collector 1231 and a positive active material, and the positive active material is coated on the surface of the positive current collector 1231. The positive current collector 1231 includes a second coated region 1232 coated with active material and a second uncoated region 1233 not coated with active material. The second uncoated region 1233 is located at an end of the second electrode sheet 123. The second uncoated region 1233 extends from the separator 122 at another end along the winding axis direction of the electrode assembly 120 and bends toward the winding axis to form a second tab 125. The second tab 125 is a corresponding positive tab.

Referring to FIG. 1 to FIG. 2, the separator 122 is disposed between the first electrode sheet 121 and the second electrode sheet 123 to isolate the positive active material layer and the negative active material layer. Taking the lithium-ion secondary battery 100 as an example, the material of the positive current collector 1231 may be aluminum, and the positive active material layer includes positive active material. The positive active material may be lithium cobalt oxide, lithium iron phosphate, ternary lithium, or lithium manganese oxide, etc. The material of the negative current collector 1211 may be copper, and the negative active material layer includes negative active material. The negative active material may be carbon or silicon, etc. The base material of the separator 122 may be polypropylene (PP) or polyethylene (PE), etc. To provide protection and insulation for the electrode assembly 120, an insulating film may also be wrapped around the exterior of the electrode assembly 120. The insulating film may be synthesized from PP, PE, polyethylene terephthalate (PET), polyvinyl chloride (PVC), or other polymer materials.

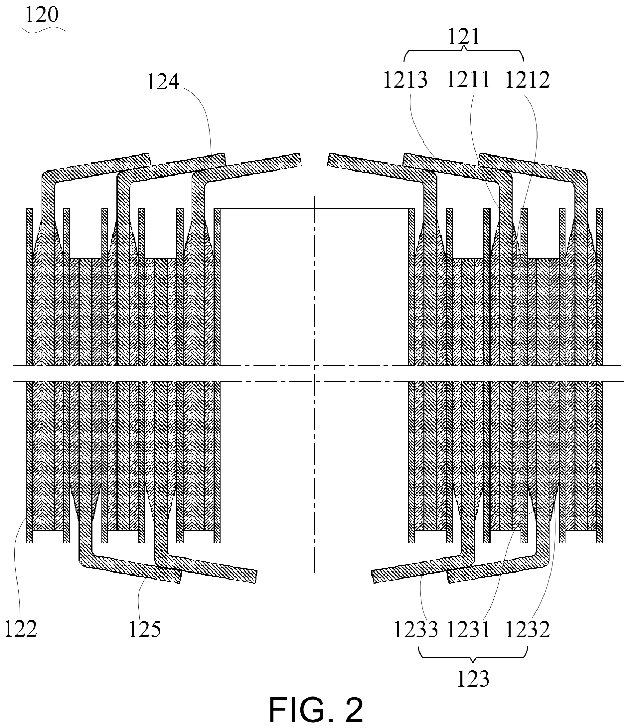

Referring to FIG. 1 and FIG. 2, further, when the first tab 124 faces the end wall 111 or faces the opening 113, the second tab 125 faces the other end of the shell 110. In this example, the second tab 125 faces the end wall 111 and is electrically connected to the pole piece 150 to make the pole piece 150 positively charged, and the first tab 124 faces the opening 113 and is electrically connected to the shell 110, thereby being negatively charged. However, in other examples, the first tab 124 may also be connected to the pole piece 150, and the second tab 125 may be connected to the shell 110.

Referring to FIG. 1, the pole piece 150 is fixed to the end wall 111 and electrically connected to the electrode assembly 120. Specifically, the end wall 111 is provided with a pole piece 150 hole, the pole piece 150 is installed through the pole piece 150 hole, and is insulated from the end wall 111. An end of the pole piece 150 facing the electrode assembly 120 passes through the end wall 111 and is directly electrically connected to the second tab 125 or electrically connected through indirect connection. The structural form of the pole piece 150 may be any suitable form capable of passing through the end wall 111 and electrically connecting to the second tab 125 of the electrode assembly 120. For example, the cross-section may be circular, square, prismatic, or an irregular profile capable of achieving stable conduction. The pole piece 150 hole corresponds to the shape of the pole piece 150. In this example, the cross-section of the pole piece 150 is circular.

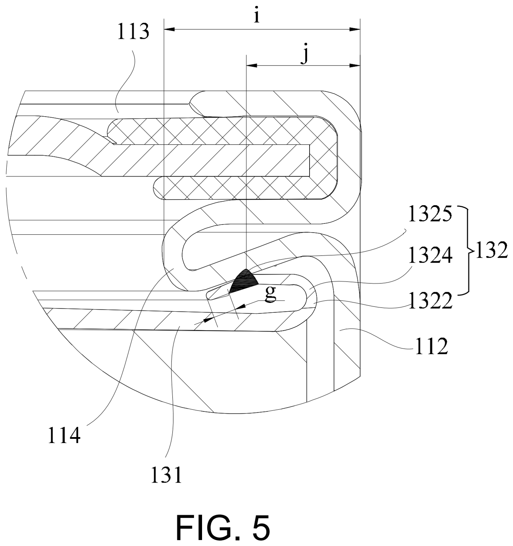

Referring to FIG. 1 and FIG. 5, the cover plate 140 is sealingly installed at the opening 113; the outer edge shape of the cover plate 140 corresponds to the shape of the opening 113 and connects with the side wall 112 to seal the opening 113. In a specific example, a rolling groove 114 that is recessed toward the interior of the shell 110 is rolled out in a region near the outer end on the side wall 112 of the shell 110. The rolling groove 114 may limit the movement of the electrode assembly 120 toward the opening 113. An annular step is formed around the shell 110 on the side of the rolling groove 114 away from the electrode assembly 120. The cover plate 140 is placed on the step, a sealing ring is disposed between the cover plate 140 and the shell 110, and the edge of the opening 113 uses a pier sealing method to make the cover plate 140 compress the sealing ring, forming a reliable connection.

Referring to FIG. 1, FIG. 4, FIG. 5 and FIG. 17, the current collecting component 130 is at least partially disposed between the rolling groove 114 and the electrode assembly 120, and the electrode assembly 120 is electrically connected to the shell 110 through the current collecting component 130. It should be noted that the shape of the current collecting component 130 may be any rotationally symmetric shape, for example, it may be circular, square, regular polygonal, petal-shaped, or other graphic shapes having a symmetric center and capable of coinciding with the original graphic after rotating a certain angle around the symmetric center. This is not limited, as long as it can achieve a stable and reliable electrical connection relationship. The center of the current collecting component 130 is its own symmetric center.

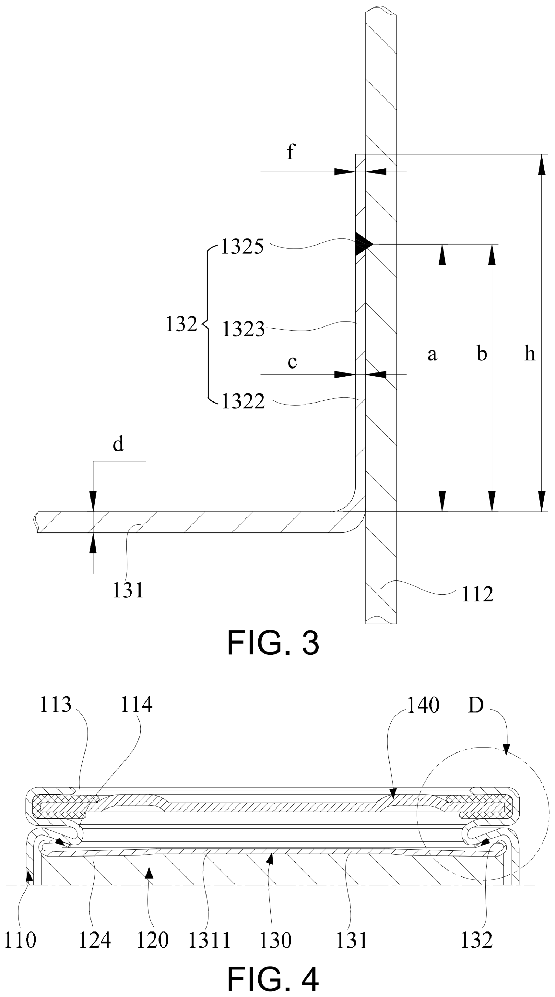

Specifically, referring to FIG. 4, the current collecting component 130 includes a current collecting body 131 and a connecting sheet 132 connected to the outer periphery of the current collecting body 131. The current collecting body 131 is welded to the first tab 124 of the electrode assembly 120. The welding method may adopt ultrasonic welding, resistance welding, laser welding, etc., which is not limited thereto. In this example, laser welding is adopted. The first tab 124 is a negative tab, and the material of the current collecting component 130 is preferably copper metal. It should be noted that the current collecting body 131 is the portion where the current collecting component 130 fits with the first tab 124, and can be used for welding the current collecting component 130 and the first tab 124. In order to improve the positioning, processing convenience, interchangeability and uniformity of the current collecting component 130 during the installation process, the current collecting body 131 in this example adopts a circular structure.

Referring to FIG. 3 to FIG. 5 and FIG. 17, the connecting sheet 132 may be an integral annular structure, or may be one or more sector-annular structures, as long as the current conduction requirements and welding strength requirements between the connecting sheet 132 and the shell 110 are satisfied. In this example, the connecting sheet 132 includes four sector-annular structures uniformly connected to the outer periphery of the current collecting body 131. Before the shell 110 rolls the rolling groove 114, the connecting sheet 132 is first welded to the side wall 112 of the shell 110, and a first welding mark 1325 is formed. While rolling the rolling groove 114, the connecting sheet 132 welded to the shell 110 continues to bend toward the center of the current collecting body 131, finally forming a structure that bends toward the axis of the shell 110 and is welded to the surface of the rolling groove 114 facing the electrode assembly 120.

Considering that the connecting sheet 132 will exert a large pulling force on the first welding mark 1325 during the bending process, causing a risk of the connecting sheet 132 breaking at the first welding mark 1325, in the subsequent pier sealing process, the current collecting component 130 is subjected to a downward pressure, and the edge of the broken current collecting component 130 approaches a vertical state, which may be pressed into the electrode assembly 120. In an example of the secondary battery 100 of the disclosure, referring to FIG. 5, FIG. 9 and FIG. 13, the connecting sheet 132 includes a bending portion 1322 located between the first welding mark 1325 and the current collecting body 131. The portion of the bending portion 1322 close to the first welding mark 1325 is provided with a first weak portion 1323 for reducing stress when the bending portion 1322 bends. The shape and size of the first weak portion 1323 are not limited. For example, it may be one or more combinations of thinning, scoring and hollowing, and all other forms that can reduce the stress when the bending portion 1322 bends. All the above forms may achieve the effect of reducing the strength of the first weak portion 1323 by reducing the cross-sectional region of the first weak portion 1323. Providing the first weak portion 1323 on the bending portion 1322 can reduce the stress when the bending portion 1322 bends, making the bending portion 1322 more bendable and less likely to break. In addition, it can reduce the stress transmission from the bending portion 1322 to the first welding mark 1325 during bending, thereby reducing the risk of the current collecting component 130 breaking at the first welding mark 1325. Furthermore, it can also reduce the risk of the edge of the current collecting component 130 being pressed into the electrode assembly 120 during the pier sealing process, thereby improving product yield.

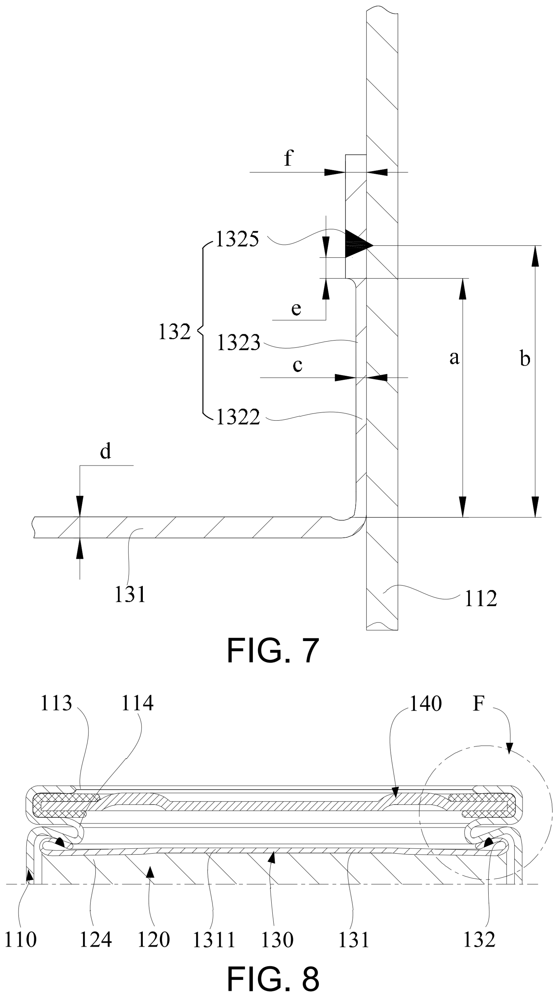

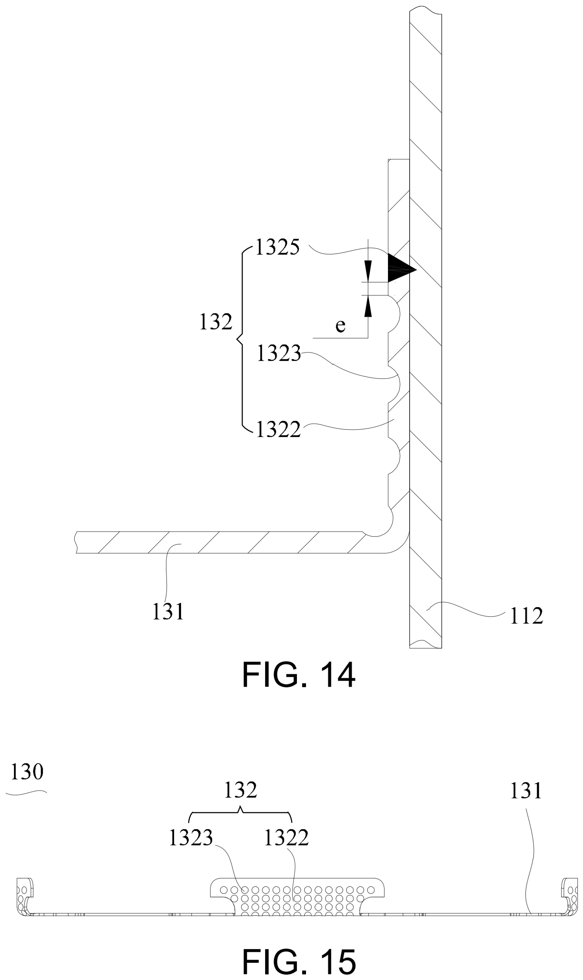

In an example of the secondary battery 100 of the disclosure, the portion of the first weak portion 1323 away from the first welding mark 1325 extends to the current collecting body 131. The first weak portion 1323 has various forms. Referring to FIG. 3 and FIG. 7, in an embodiment, the first weak portion 1323 is a thinned structure. Referring to FIG. 15, in another embodiment, the first weak portion 1323 is a hollow structure. It can be understood that the shape of the hollow structure is not limited to the circular hole in FIG. 15, and may also be elliptical, diamond-shaped, or any other shape that can reduce the stress when the bending portion 1322 bends. In some other embodiments, the first weak portion 1323 may also be a scoring structure or a combination structure of the above various forms. The first weak portion 1323 may be continuous, as shown in FIG. 3 and FIG. 7, or may be discontinuous, as shown in FIG. 14 and FIG. 15. It should be noted that the shapes of the starting end and terminal end of the first weak portion 1323 are not limited, and may be rounded corners or right angles. In order to reduce the stress concentration problem caused by abrupt changes in cross-sectional region, preferably, the starting end and terminal end of the first weak portion 1323 are provided with rounded corners, as shown in FIG. 7, FIG. 11 and FIG. 14. In this technical solution, the bending stress at the junction between the first weak portion 1323 and the current collecting body 131 is weakened, which is beneficial to the bending of the connecting sheet 132. Meanwhile, since the junction between the first weak portion 1323 and the current collecting body 131 will first generate deformation during the bending process to reduce the stress transmission toward the welding connection portion between the current collecting component 130 and the tab, thereby improving the welding failure problem between the current collecting component 130 and the tab caused by bending stress.

Referring to FIG. 3 and FIG. 7, in an example of the secondary battery 100 of the disclosure, the thickness of the first weak portion 1323 is c, and the thickness of the current collecting body 131 is d, where c<d. That is, the thickness of the first weak portion 1323 is thinner than the thickness of the current collecting body 131. This technical solution adopts the method of thickness reduction to achieve the effect of reducing the bending stress of the first weak portion 1323. It should be noted that the method of thickness reduction includes thinning or material removal, etc., and the method is not limited thereto. In this embodiment, thinning is adopted, providing the structure with low processing cost and obvious effect of reducing bending stress.

Referring to FIG. 3 and FIG. 7, in an example of the secondary battery 100 of the disclosure, 0.05mm≤c≤0.15mm. Limiting the thickness c of the first weak portion 1323 to <0.15mm can achieve the effect of reducing the bending stress of the first weak portion 1323, which is beneficial to the bending of the first weak portion 1323. The limitation of the thickness c of the first weak portion being 1323 ≥0.05mm ensures that the first weak portion 1323 has sufficient mechanical strength while being conducive to current conduction, thereby ensuring the conductive performance of the current collecting component 130.

Referring to FIG. 3 and FIG. 7, in an example of the secondary battery 100 of the disclosure, along the extending direction of the first weak portion 1323, the length of the first weak portion 1323 is a, where 1.5mm≤a≤3mm. It should be noted that the above-mentioned extending direction refers to the direction in which the bending portion 1322 bends from the first welding mark 1325 to the current collecting body 131. Limiting the length a of the first weak portion 1323 to ≥1.5mm can make the first weak portion 1323 have a larger length, achieving the effect of further reducing the bending stress of the bending portion 1322. The bending portion 1322 can bend to a greater extent, so that the tensile force at the first welding mark 1325 is further reduced when the bending portion 1322 bends, thereby reducing the risk of the current collecting component 130 breaking at the first welding mark 1325. The limitation of a≤3mm can enable the connecting sheet 132 to have both the effect of easy bending and not easy breaking while also having high strength.

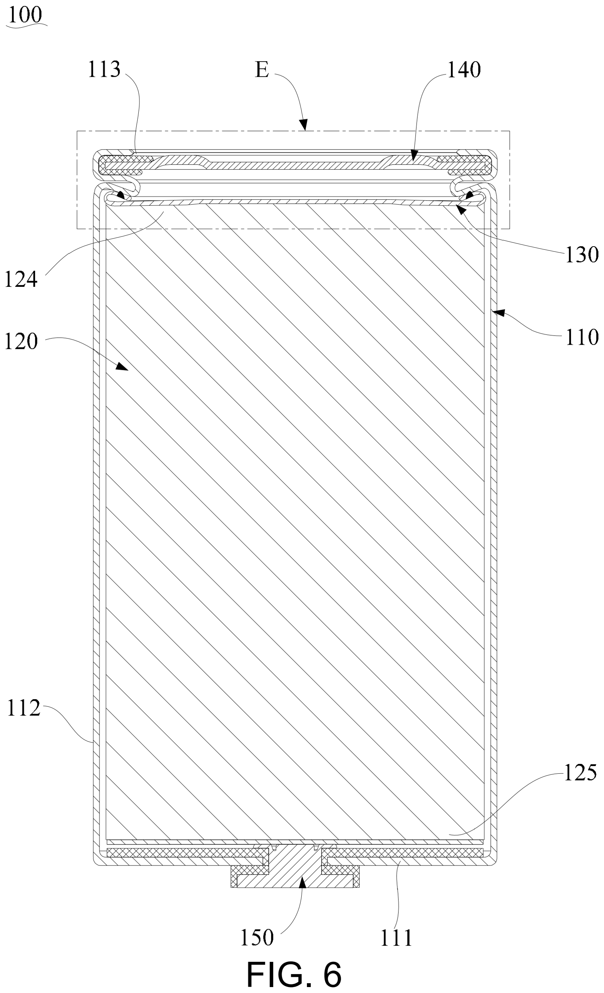

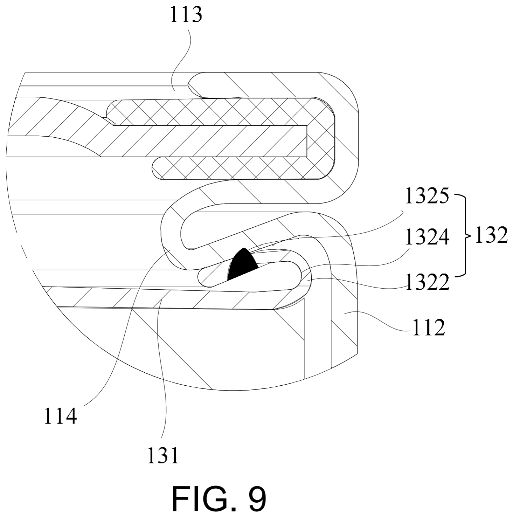

Referring to FIG. 6 and FIG. 9, in an example of the secondary battery 100 of the disclosure, along the extending direction of the first weak portion 1323, the length of the bending portion 1322 is b, and the thickness of the connecting sheet 132 at the first welding mark 1325 is f, where a<b and c<f. a<b indicates that a partial region of the bending portion 1322 is provided with the first weak portion 1323. The first weak portion 1323 can reduce the stress when the bending portion 1322 bends, making the bending portion 1322 more bendable and less likely to break, thereby reducing the risk of the edge of the current collecting component 130 being pressed into the electrode assembly 120 during the pier sealing process. Furthermore, c<f indicates that the thickness of the connecting sheet 132 at the first welding mark 1325 is greater than the thickness of the first weak portion 1323. This arrangement can achieve the formation of a thicker molten pool at the first welding mark 1325, enabling the connecting sheet 132 and the side wall 112 to have higher welding strength, which can reduce the probability of breaking of the connecting sheet 132. It should be noted that the thickness of the connecting sheet 132 from the free end to the first welding mark 1325 may be equal or unequal, which is not limited thereto. Referring to the figure, in this embodiment, the thickness of the portion of the connecting sheet 132 from the free end to the first welding mark 1325 is all f. The processing technology with equal thickness is simpler, the process window for welding between the connecting sheet 132 and the rolling groove 114 is larger, and it is beneficial to the improvement of welding strength.

Furthermore, in an example of the secondary battery 100 of the disclosure, based on the above-mentioned form of the first weak portion 1323, the bending portion 1322 bends to form a first corner 1324 with an overall arc transition, as shown in FIG. 8 and FIG. 9. Due to having lower bending stress, the bending portion 1322 can bend to the maximum extent to form the first corner 1324 with an overall arc transition. It should be noted that the first corner 1324 is not limited to any angle. As long as the bent portion has a smooth transition, it can be considered as a form covered by this technical solution. The bending stress at each part of the bending portion 1322 with this shape is relatively balanced, reducing internal stress, so the tensile force at the first welding mark 1325 is reduced during bending, thereby reducing the risk of the current collecting component 130 breaking at the first welding mark 1325. In addition, the bent bending portion 1322 has a smaller thickness in the height direction of the secondary battery 100, which can reduce the risk of the current collecting component 130 being pressed into the electrode assembly 120 during pier sealing, thereby improving the conductive performance and safety performance of the secondary battery 100.

Referring to FIG. 1 and FIG. 3 to FIG. 5, in an example of the secondary battery 100 of the disclosure, the overall thickness of the connecting sheet 132 is c. The entire bending portion 1322 is equivalent to the first weak portion 1323. Since c<d, it indicates that the thickness of the entire connecting sheet 132 is reduced relative to the thickness of the current collecting body 131, achieving the effect of further reducing the bending stress of the bending portion 1322. The bending portion 1322 can bend to a greater extent and is less likely to break. Moreover, the connecting sheet 132 with this arrangement has a simple processing technology and an obvious effect of reducing bending stress. In addition, even if the bending portion 1322 breaks, due to the reduced bending stress of the bending portion 1322, it is easier to bend during the pier sealing process, which still reduces the risk of damage to the electrode assembly 120 caused by its insertion into the electrode assembly 120.

Furthermore, referring to FIG. 4 and FIG. 5, based on the structural form of the bending portion 1322 in the above embodiment, the bending portion 1322 bends to form a first corner 1324 with an overall arc transition. Due to having lower bending stress, the bending portion 1322 can bend to the maximum extent to form the first corner 1324 with an overall arc transition. It should be noted that the first corner 1324 is not limited to any angle. As long as the bent portion has a smooth transition, it can be considered as a form covered by this technical solution. The bending stress at each part of the bending portion 1322 with this shape is relatively balanced, reducing internal stress, so the tensile force at the first welding mark 1325 is reduced during bending, thereby reducing the risk of the current collecting component 130 breaking at the first welding mark 1325. In addition, the bent bending portion 1322 has a smaller thickness in the height direction of the secondary battery 100, which may reduce the risk of the current collecting component 130 being pressed into the electrode assembly 120 during pier sealing, thereby improving the conductive performance and safety performance of the secondary battery 100.

In an example of the secondary battery 100 of the disclosure, there are multiple first weak portions 1323, and the multiple first weak portions 1323 are arranged along a direction from the first welding mark 1325 toward the current collecting body 131. That is, the multiple first weak portions 1323 are arranged intermittently. For example, in an embodiment, as shown in FIG. 14, the first weak portion 1323 includes four spaced thinned regions. In another embodiment, as shown in FIG. 15, the first weak portion 1323 includes four spaced hollow regions. The intermittent arrangement of the multiple first weak portions 1323 may enable the connecting sheet 132 to have both the effect of easy bending and resistance to breaking, as well as high strength.

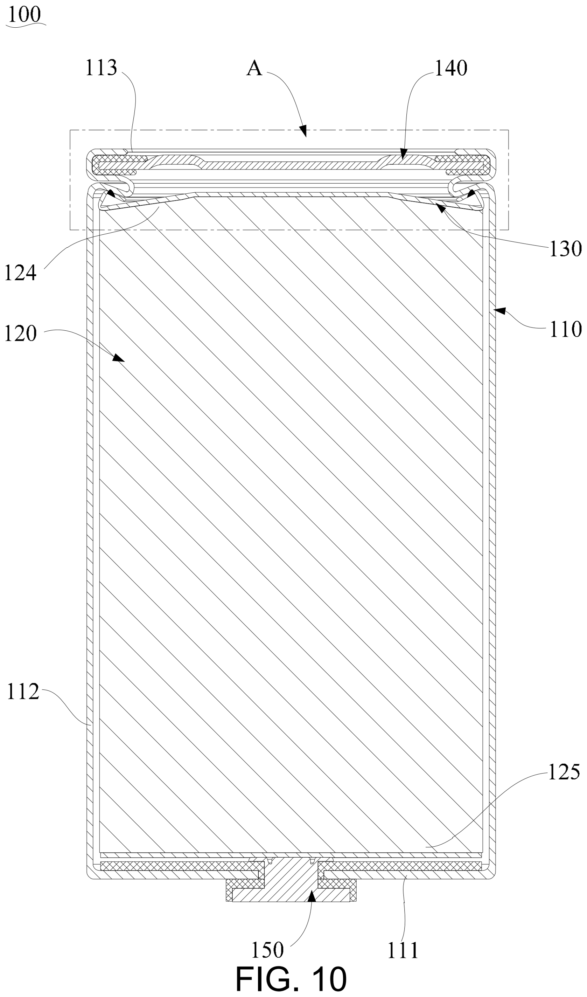

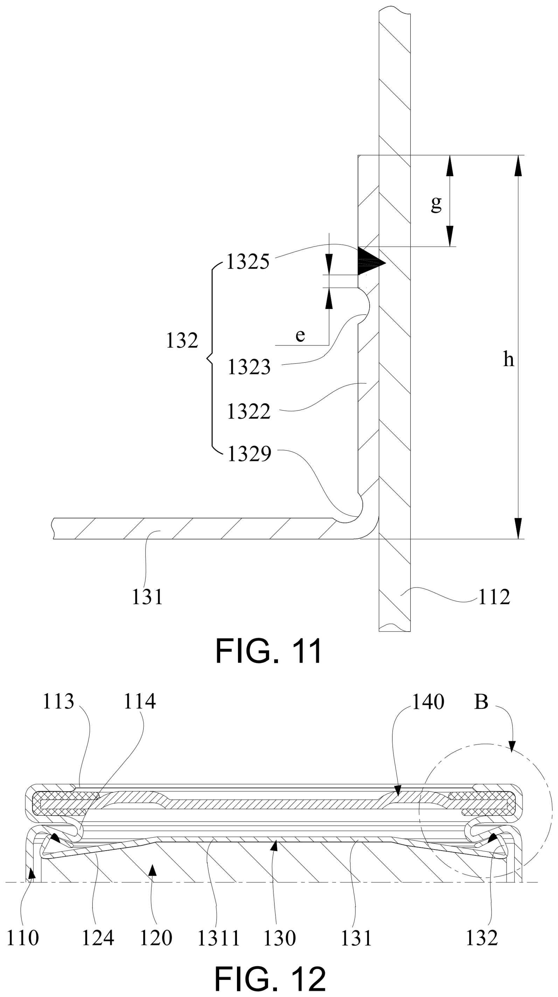

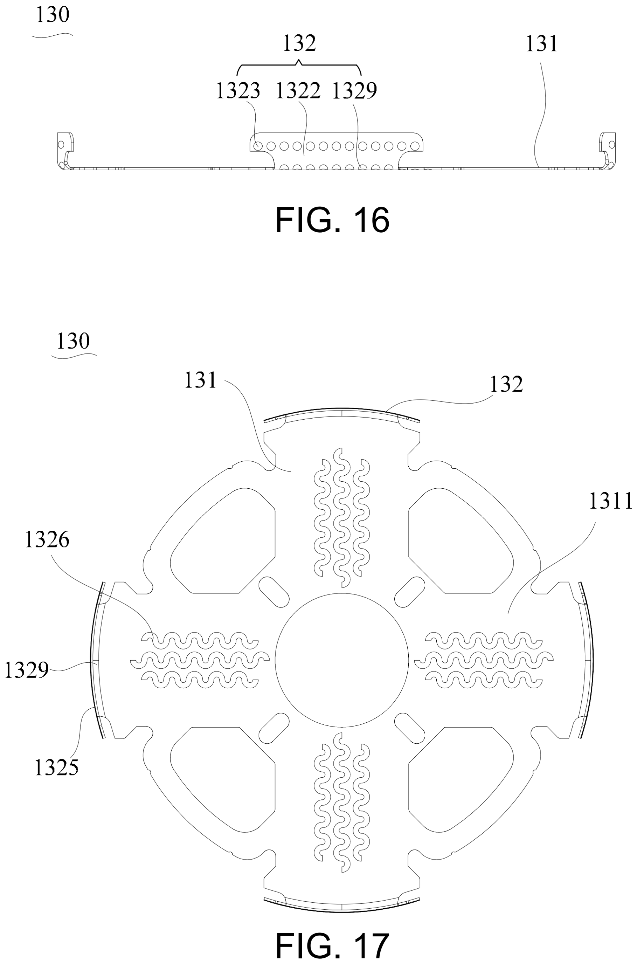

Referring to FIG. 10 to FIG. 13, in an example of the secondary battery 100 of the disclosure, a second weak portion 1323 is disposed between the current collecting body 131 and the bending portion 1322, and the second weak portion 1329 is disposed at a portion of the bending portion 1322 away from the first welding mark 1325. The second weak portion 1329 is configured to reduce stress transmission from the bending portion 1322 to the current collecting body 131 during bending. The form of the second weak portion 1329 includes one or more combinations of thinning, scoring, and hollowing, but is not limited thereto. All the above forms may achieve the effect of reducing the strength of the second weak portion 1329 by reducing the cross-sectional region of the second weak portion 1329. For example, in an embodiment, the second weak portion 1329 is a thinned structure, as shown in FIG. 11. In another embodiment, the second weak portion 1329 is a hollow structure, as shown in FIG. 16.

Preferably, the bending strength of the portion of the bending portion 1322 located between the first weak portion 1323 and the second weak portion 1329 is higher than the bending strength of the first weak portion 1323 and the second weak portion 1329. When the bending portion 1322 bends, deformation will first occur at the two positions of the first weak portion 1323 and the second weak portion 1329. The deformation of the first weak portion 1323 may reduce stress transmission toward the first welding mark 1325, thereby improving the problem that the first welding mark 1325 is prone to being pulled apart. The deformation of the second weak portion 1329 may reduce stress transmission toward the welding connection portion between the current collecting component 130 and the first tab 124, thereby improving the problem of welding failure between the current collecting component 130 and the first tab 124 caused by bending stress. In addition, the high bending strength of the portion of the bending portion 1322 located between the first weak portion 1323 and the second weak portion 1329 is beneficial to improving the structural strength of the bending portion 1322, and may provide support to the torn current collecting component 130 during pressure release, facilitating folding to form a larger pressure release region.

Based on the structural form of the first weak portion 1323 in the above embodiments, in an example of the secondary battery 100 of the disclosure, referring to FIG. 12, FIG. 13 and FIG. 17, the current collecting body 131 includes a plurality of folded portions 1311. The folded portions 1311 are configured to be capable of folding from the middle of the current collecting body 131 toward a direction away from the electrode assembly 120 when the internal pressure of the secondary battery 100 exceeds a threshold. The plurality of folded portions 1311 may be an integral structure connected along a circumferential direction, or may be independent structures separated from each other, which is not limited thereto, as long as folding may be achieved to realize pressure release when the internal pressure of the secondary battery 100 exceeds the threshold. Further, a second corner 1327 is formed at the second weak portion 1329, and a third corner 1328 is formed at the first weak portion 1323. After the current collecting component 130 bends following the deformation of the rolling groove, the bending portion 1322, the current collecting body 131, and the portion from the free end of the connecting sheet 132 to the first welding mark 1325 form a triangle-like structure, and the triangle structure has higher stability. In addition, when the secondary battery 100 releases pressure, the folded portions 1311 will fold from the middle of the current collecting body 131 toward the direction away from the electrode assembly 120. Since the second corner 1327 may provide a fulcrum for the folded portions 1311, the folded portions 1311 may fold to a large extent to obtain a larger pressure release region, thereby improving the safety performance of the secondary battery 100.

Referring to FIG. 17, in an example of the secondary battery 100 of the disclosure, the folded portions 1311 are welded to the electrode assembly 120 to form second welding marks 1326. Specifically, the folded portions 1311 are welded and connected with the first tabs 124. The shape and position of the second welding marks 1326 are not limited. For example, they may be straight lines, curves (wavy lines, arc lines, sine curves, etc.), broken lines, or other irregular patterns, as long as stable current transmission between the electrode assembly 120 and the current collecting component 130 may be achieved. In this embodiment, the current collecting body 131 includes four folded portions 1311 uniformly distributed along the circumferential direction of the current collecting body 131. There are also four groups of second welding marks 1326 respectively located on the four folded portions 1311, that is, the four folded portions 1311 are respectively formed by welding with the first tabs 124. Specifically, each group of second welding marks 1326 includes three wavy line-shaped welding marks. This arrangement may make the welding balance stability between the current collecting component 130 and the first tabs 124 better, and have a more uniform current conducting effect, thereby improving the stability of current conduction between the shell 110 and the electrode assembly 120.

Considering that pressure release will occur at the end where the cover plate 140 is located when the internal pressure of the battery exceeds a threshold, the portion where the folded portions 1311 are welded and connected with the first tabs 124 will restrict the folding of the current collecting component 130, affecting the pressure release effect. Referring to FIG. 17, in this embodiment, along the radial direction of the shell 110, each folded portion 1311 is at least partially collinear with the connecting sheet 132. This arrangement may achieve that the second corner 1327 and the folded portion 1311 are also at least partially collinear, which may further improve the supporting effect of the second corner 1327 on the folded portion 1311 during pressure release of the secondary battery 100. Moreover, since the bending portion 1322 located between the first weak portion 1323 and the second weak portion 1329 has high bending resistance, it is beneficial for the folded portion 1311 to fold to a greater extent to obtain a larger pressure release region, thereby improving the safety performance of the secondary battery 100.

Referring to FIG. 7, FIG. 11 and FIG. 14, in an example of the secondary battery 100 of the disclosure, the distance from the end of the first weak portion 1323 close to the first welding mark 1325 to the first welding mark 1325 is e, where e≥0.2mm. This arrangement may make the first weak portion 1323 and the first welding mark 1325 have a safety distance greater than or equal to 0.2mm, which may prevent the strength of the first weak portion 1323 from being reduced due to the influence of welding heat.

In an example of the secondary battery 100 of the disclosure, the second weak portion 1329 includes one or more combinations of thinning, scoring and hollowing. For example, referring to FIG. 11, in an embodiment, the second weak portion 1329 is a thinned structure. In another embodiment, referring to FIG. 16, the second weak portion 1329 is a hollow structure. One or more combinations of thinning, scoring and hollowing may all achieve the effect of reducing the strength of the first weak portion 1323 by reducing the cross-sectional region of the second weak portion 1329.

In an example of the secondary battery 100 of the disclosure, the first weak portion 1323 includes one or more combinations of thinning, scoring and hollowing. For example, referring to FIG. 3 and FIG. 7, in an embodiment, the first weak portion 1323 is a thinned structure. Referring to FIG. 15, in another embodiment, the first weak portion 1323 is a hollow structure. One or more combinations of thinning, scoring and hollowing may all achieve the effect of reducing the strength of the first weak portion 1323 by reducing the cross-sectional region of the first weak portion 1323.

Referring to FIG. 3 and FIG. 5, in an example of the secondary battery 100 of the disclosure, along the radial direction of the current collecting body 131, the distance from the side of the first welding mark 1325 close to the center of the current collecting body 131 to the free end of the connecting sheet 132 is g, the expanded size of the connecting sheet 132 is h, where g≤h/3. By limiting the relative size between the distance g and the size h, limiting the distance between the first welding mark 1325 and the free end of the connecting sheet 132 within the range of g≤h/3, it may ensure that during the rolling groove process, the bending moment generated by the rolling groove force on the first welding mark 1325 is small, reducing the probability of the connecting sheet 132 breaking at the position of the first welding mark 1325, thereby reducing the probability of the edge of the current collecting component 130 being pressed into the electrode assembly 120, and improving product yield. At the same time, the bending moment generated by the rolling groove force on the first welding mark 1325 is small, and thus the deformation stress transmitted from the position of the first welding mark 1325 to the periphery of the current collecting body 131 during the rolling groove process may also be correspondingly reduced, thereby reducing the downward pressure generated by the periphery of the current collecting body 131 on the electrode assembly 120, further reducing the probability of the edge of the current collecting component 130 being pressed into the electrode assembly 120.

Referring to FIG. 5, in an example of the secondary battery 100 of the disclosure, further, the range of the distance g from the side of the first welding mark 1325 close to the center of the current collecting body 131 to the free end of the connecting sheet 132 is defined as: 0.2mm≤g≤1mm. This may satisfy the welding position requirements between most current collecting assemblies 130 and the side wall 112, and may also further reduce the probability of the connecting sheet 132 breaking at the position of the first welding mark 1325 during the rolling groove process.

Referring to FIG. 5, in an example of the secondary battery 100 of the disclosure, along the radial direction of the secondary battery 100, the distance from the point on the rolling groove 114 closest to the axis of the shell 110 to the outer peripheral surface of the shell 110 is i, the distance from the first welding mark 1325 to the outer peripheral surface of the shell 110 is j, defining j≤0.5i. This definition may reduce the pulling force on the first welding mark 1325 when the side of the rolling groove 114 close to the axis of the shell 110 undergoes tensile deformation during the rolling groove process, further improving the problem that the connecting sheet 132 is easily pulled apart at the first welding mark 1325.

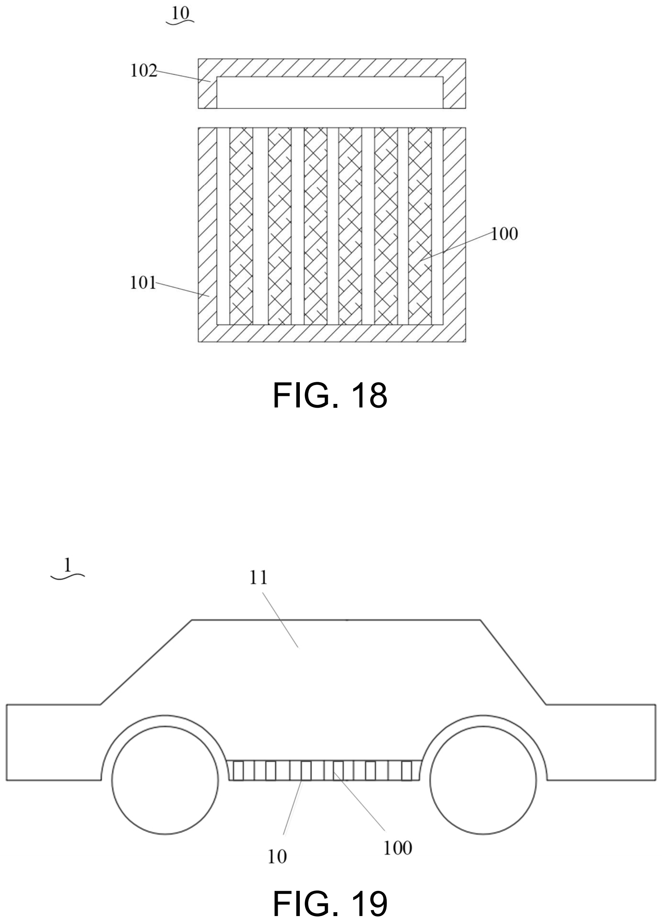

Referring to FIG. 18, the disclosure also provides a battery pack 10. The battery pack 10 includes the secondary battery 100 of any one of the above. In an embodiment of the battery pack 10 of the disclosure, the battery pack 10 includes a housing 101, a housing cover 102 and a plurality of secondary batteries 100. The plurality of secondary batteries 100 are placed in the housing 101, connected in series or in parallel with each other, or in a combination of series and parallel connections. The housing cover 102 is sealed on the housing 101 to protect the plurality of secondary batteries 100. It should be noted that the battery pack 10 may also include parts such as a thermal management system for the battery pack 10, circuit boards, etc., in addition to the secondary battery 100 of the disclosure. The battery pack 10 may be a battery module or a battery pack, energy storage cabinet, etc. These will not be expanded upon one by one here.

Referring to FIG. 19, the disclosure also provides an electronic device 1, and the electronic device 1 includes the battery pack 10. A working portion 11 is electrically connected to the battery pack 10 to obtain electrical energy support. As an example, the electronic device 1 is a vehicle, the vehicle may be a fuel vehicle, a gas vehicle or a new energy vehicle. The new energy vehicle may be a pure electric vehicle, a hybrid vehicle or an extended-range vehicle, etc., but is not limited thereto. The working portion 11 is a vehicle body, the battery pack 10 is disposed at the bottom of the vehicle body, and provides electrical energy support for the driving of the vehicle or the operation of electrical components in the vehicle. However, in some other embodiments, the electronic device 1 may also be a mobile phone, a portable device, a laptop computer, a ship, a spacecraft, an electric toy and an electric tool, etc. The spacecraft includes aircraft, rockets, space shuttles and spaceships, etc. The working portion 11 may be a unit component that may obtain electrical energy from the battery pack 10 and perform corresponding work, such as a blade rotation unit of a fan, a dust suction working unit of a vacuum cleaner, etc. Electric toys include stationary or mobile electric toys, for example, game consoles, electric car toys, electric ship toys and electric airplane toys, etc. Electric tools include metal cutting electric tools, grinding electric tools, assembly electric tools and railway electric tools, for example, electric drills, electric grinders, electric wrenches, electric screwdrivers, electric hammers, impact drills, concrete vibrators and electric planers, etc. The embodiments of this application do not impose special restrictions on the above-mentioned electronic device 1.

The secondary battery of the disclosure has a first weak portion disposed on the bending portion, which may reduce the stress when the bending portion bends, making the bending portion more bendable and less likely to break. In addition, it may also reduce the stress transmission from the bending portion to the first welding mark when the bending portion bends, thereby reducing the risk of the current collecting component breaking at the first welding mark. Furthermore, it may also reduce the risk of the edge of the current collecting component being pressed into the electrode assembly during the pier sealing process, thereby improving product yield. Therefore, the disclosure effectively overcomes some practical problems in the prior art and thus has high utilization value and practical significance.

## Claims

1. A secondary battery (100), comprising:
an electrode assembly (120);
a shell (110) accommodating the electrode assembly (120), wherein an end of the shell (110) comprises an opening (113), a side of the shell (110) close to the opening (113) comprises a rolling groove (114) recessed toward an interior of the shell (110), and the rolling groove (114) restricts the electrode assembly (120) from moving in a direction toward the opening (113);
a current collecting component (130) at least partially disposed between the rolling groove (114) and the electrode assembly (120), the current collecting component (130) comprising a current collecting body (131) and a connecting sheet (132) connected to an outer periphery of the current collecting body (131), wherein the current collecting body (131) is connected to the electrode assembly (120), the connecting sheet (132) bends toward a center of the current collecting body (131), and the connecting sheet (132) is welded to a surface of the rolling groove (114) facing the electrode assembly (120), thereby forming a first welding mark (1325);
wherein the connecting sheet (132) comprises a bending portion (1322) located between the first welding mark (1325) and the current collecting body (131), a portion of the bending portion (1322) close to the first welding mark (1325) is provided with a first weak portion (1323) for reducing a stress transmission from the bending portion (1322) to the first welding mark (1325) when the bending portion (1322) bends.

2. The secondary battery (100) according to claim 1, wherein a portion of the first weak portion (1323) away from the first welding mark (1325) extends to the current collecting body (131).

3. The secondary battery (100) according to claim 2, wherein a thickness of the first weak portion (1323) is c, a thickness of the current collecting body (131) is d, and c<d,
wherein 0.05mm≤c≤0.15mm.

4. The secondary battery (100) according to claim 3, wherein along an extending direction of the first weak portion (1323), a length of the first weak portion (1323) is a, and 1.5mm≤a≤3mm.

5. The secondary battery (100) according to claim 4, wherein along the extending direction of the first weak portion (1323), a length of the bending portion (1322) is b; a thickness of the connecting sheet (132) at the first welding mark (1325) is f, wherein a<b and c<f.

6. The secondary battery (100) according to claim 3, wherein an overall thickness of the connecting sheet (132) is c, and the bending portion (1322) bends to form a first corner (1324) with an overall arc transition.

7. The secondary battery (100) according to claim 1, comprising a plurality of the first weak portions (1323), wherein the plurality of first weak portions (1323) are arranged along a direction from the first welding mark (1325) toward the current collecting body (131); and/or
a second weak portion (1329) is disposed between the current collecting body (131) and the bending portion (1322), the second weak portion (1329) is disposed at a portion of the bending portion (1322) away from the first welding mark (1325), and the second weak portion (1329) is configured to reduce a stress transmission to the current collecting body (131) when the bending portion (1322) bends.

8. The secondary battery (100) according to claim 7, wherein the current collecting body (131) comprises a plurality of folded portions (1311), the plurality of folded portions (1311) are configured to be able to fold from a middle portion of the current collecting body (131) toward a direction away from the electrode assembly (120) when an internal pressure of the secondary battery (100) exceeds a threshold, a second corner (1327) is formed at the second weak portion (1329), a third corner (1329) is formed at the first weak portion (1323), and along a radial direction of the shell (110), a distance from the second corner (1327) to an inner wall of the shell (110) is smaller than a distance from the third corner (1329) to the inner wall of the shell (110).

9. The secondary battery (100) according to claim 8, wherein the folded portion (1311) is welded to the electrode assembly (120) to form a second welding mark (1326), and along the radial direction of the shell (110), each of the plurality of folded portions (1311) is at least partially collinear with the connecting sheet (132).

10. The secondary battery (100) according to claims 5 or 7, wherein a distance from an end of the first weak portion (1323) close to the first welding mark (1325) to the first welding mark (1325) is e, and e≥0.2mm.

11. The secondary battery (100) according to claim 7, wherein the second weak portion (1329) comprises one of or a combination among thinning, scoring, and hollowing, wherein the first weak portion (1323) comprises one of or a combination among thinning, scoring, and hollowing.

12. The secondary battery (100) according to claim 1, wherein along a radial direction of the shell (110), a distance from a side of the first welding mark (1325) close to a center of the current collecting body (131) to a free end of the connecting sheet (132) is g, a size of the unfolded connecting sheet (132) is h, and g≤h/3.

13. The secondary battery (100) according to claim 12, wherein 0.2mm≤g≤1mm.

14. The secondary battery (100) according to claim 12, wherein along a radial direction of the secondary battery (100), a distance from a point on the rolling groove (114) closest to an axis of the shell (110) to an outer peripheral surface of the shell (110) is i, a distance from the first welding mark (1325) to the outer peripheral surface of the shell (110) is j, and j≤0.5i.

15. A battery pack (10), comprising the secondary battery (100) according to any one claims 1-14.
